# EUROPEAN PATENT APPLICATION

(11) **EP 0 666 016 A1**
(43) Date of publication of application: **09.08.1995**
(21) Application number: 95300766.3
(22) Date of filing: 08.02.1995
(51) Int. Cl.: A01B 59/042

(54) **Agricultural machines**

(30) Priority: 08.02.1994 GB 9402352
(71) Applicant: KVERNELAND KIDD LIMITED, Devizes, Wiltshire SN10 2HP (GB)
(72) Inventor: Purchas, Michael Denis, Trowbridge, Wiltshire, BA14 7LL (GB)
(74) Representative: Carpenter, David

(57) **Abstract**

An agricultural machine is disclosed which is intended to be trailed by a suitable vehicle, the machine including a drawbar of adjustable length which comprises a first element (12) for connection to the vehicle, a second element (16) connected to the machine, and means (30) for moving the first element (12) with respect to the second element (16) in order to adjust the length of the drawbar. The invention also relates to a method of adjusting the separation of a machine from a vehicle by adjusting the length of the drawbar.

## Description

This invention relates to agricultural machines and particularly to trailed agricultural machines of the type which require accurate positioning, for example mixer feeders.

Where a vehicle is used to trail an agricultural machine of the type mentioned above, for example a tractor used to trail a wheeled mixer feeder, it is sometimes necessary to reposition the machine, in use. For example, in the case of filling a mixer feeder from a silage clamp, it is necessary to reverse the mixer feeder to a position in which the rear of the machine is adjacent the silage clamp in order to allow cutters provided at the rear of the mixer feeder to remove silage from the clamp. It will be recognised that with the mixer feeder positioned behind the tractor obscuring the operators view, accurate positioning of the mixer feeder with respect to the silage clamp is extremely difficult. Further, as silage from the clamp is loaded into the mixer feeder, continued filling of the mixer feeder requires the mixer feeder to be reversed closer to the clamp. The operator is therefore required to return to the tractor and reverse the tractor again with his view obscured by the mixer feeder.

It will be recognised that such accurate positioning of the agricultural machine is difficult and time consuming and a risk of damage to the machine by inaccurate control over the tractor is present.

It is an object of the invention to obviate or mitigate the above mentioned disadvantages.

According to the present invention there is provided an agricultural machine arranged to be trailed behind a vehicle, the agricultural machine including a drawbar, and characterized in that the drawbar is of adjustable length and comprises a first element, and a second element secured to the agricultural machine and movable with respect to the first element in order to adjust the effective length of the drawbar to adjust the separation of the machine from the vehicle, and means for moving the second element with respect to the first element.

The provision of an agricultural machine with such a drawbar allows relatively accurate positioning of the agricultural machine, the position of the machine being adjustable relative to the stationary towing vehicle by adjusting the length of the drawbar.

The agricultural machine preferably further comprises a storage area and means provided at the rear of the agricultural machine for loading the storage area. The means for loading preferably comprises cutter means.

Desirably said first and second elements of the drawbar are in a telescopic arrangement.

The means for moving the second element with respect to the first element preferably interconnects the first and second elements.

Alternatively, the first and second elements may be pivotable with respect to one another, the means for moving the second element with respect to the first element being arranged to adjust the angle therebetween. The machine conveniently includes third and fourth pivotally interconnected elements, the first, second, third and fourth elements defining a parallelogram, the means for moving conveniently interconnecting the pivotal connection of the first and second elements with that of the third and fourth elements.

Preferably, the means for moving comprises a ram.

The ram is preferably a double acting ram, preferably a hydraulic ram. Alternatively, the ram may be pneumatically operated.

Preferably, the machine further comprises remote control means for controlling relative movement of said elements.

Alternatively, the means for moving said elements relative to one another comprises an externally screw threaded member arranged to engage an internally screw threaded member, and means for rotating one of the screw threaded members with respect to the other screw threaded member to adjust the relative positions of the first and second elements.

The means for rotating one of the screw threaded elements is preferably hydraulically driven. Alternatively, the means for rotating one of the screw threaded elements may be electrically driven, for example by an electric motor.

In a further alternative, the means for moving the second element with respect to the first element comprises an electrically operated linear actuator.

The invention further relates to a method of adjusting the separation of an agricultural machine from a towing vehicle characterized by the step of actuating a mechanism for adjusting the length of a drawbar interconnecting the agricultural machine and the vehicle, preferably from the exterior of the towing vehicle by way of a remote control means.

The invention will further be described with reference to the accompanying drawings, in which:
Figure 1 is a cross-sectional view of a drawbar of an agricultural machine according to an embodiment of the invention; and
Figure 2 is a cross-sectional view of part of the drawbar of Figure 1.

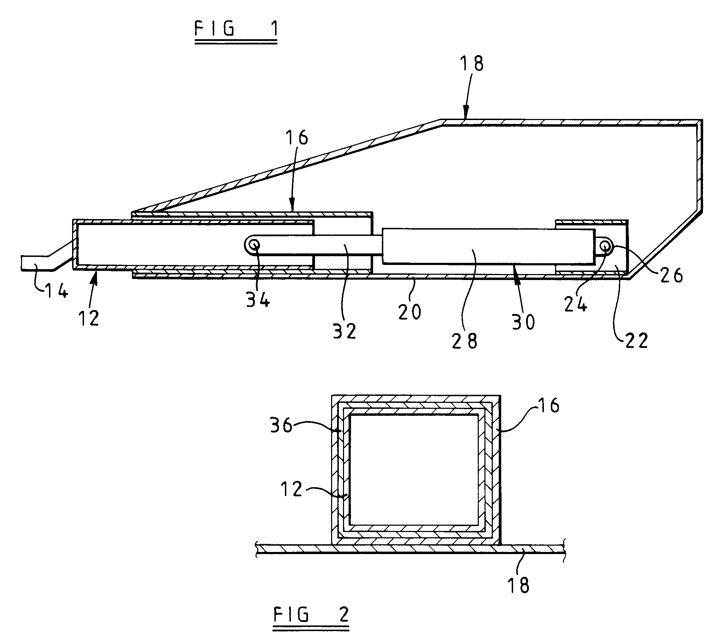

The drawbar illustrated in Figures 1 and 2 is particularly intended for use with a mixer feeder, but could be used with other trailed agricultural machine which requires manoeuvring, in use, to accurately position the device, or in which the device requires repeated repositioning, in use.

The mixer feeder is generally of known form with the exception of the drawbar construction and a control mechanism therefore, and comprises a wheeled chassis supporting a large feed receptacle within which is positioned a plurality of rotatable elongate augers driven from the power take off shaft of the towing tractor. In various embodiments there may be one or more augers and the augers in use serve to mix, and in some cases chop, foodstuffs in the feed receptacle. The augers may be arranged to carry foodstuffs into the receptacle from an inlet point, and may also be arranged to carry mixed and, where appropriate, chopped foodstuffs to a discharge mechanism of the machine. In order that the mixer feeder can be supplied with silage from a silage clamp the mixer feeder includes a silage cutter in the form of a rotatably driven, toothed, drum carried at the end of an elongate pivoted arm.

In use the mixer feeder is presented to the face of a silage clamp, from which silage is to be cut, and drive to the toothed drum is initiated. The toothed drum rotates against the face of the silage clamp thus tearing or cutting silage from the clamp and feeding it either directly into the receptacle of the mixer feeder, or into an inlet arrangement therefore. The arm carrying the drum is moved, usually by hydraulic rams, to sweep the cutting drum vertically or substantially vertically relative to the silage clamp so that the drum cuts in generally vertical passes. It will be recognised therefore that initial positioning of the mixer feeder relative to the face of the silage clamp is critical, and, since the receptacle will not be filled in a single vertical pass of the cutting drum there is the need, during filling, to reposition the mixer feeder closer to the silage clamp.

The drawbar comprises a first box-section steel element 12 to one end of which is secured a hoop 14 arranged to be secured to a tractor or other suitable towing vehicle, in use. The first element 12 is slidable within a second element comprising a box-section steel member 16 provided within a steel housing 18 secured to the chassis of the mixer feeder, for example by welding or by being bolted thereto.

The steel member 16 is secured within the housing 18 by welding the lower surface of the steel member 16 to the inside of the lower wall 20 of the housing 18.

The second element further includes a pair of parallel brackets 22 formed from steel angle section and bolted or otherwise secured to the inner surface of the lower wall 20 of the housing. A pivot pin 24 extends between the brackets 22, being secured therein by cotters or the like, through a mounting boss provided at the outer end of the cylinder 28 of a double acting hydraulic ram 30. The outer end of the rod 32 of the ram 30 is also provided with a mounting boss through which extends a pivot pin 34 similar to the pin 24. A bolt passing through the wall of the boss and a cross drilling of the pin 34 secures the pin 34 to the boss of the rod 32, the ends of the pin 34 being rotatably received in the opposite side walls of element 12 respectively. The element 12 has access apertures for providing access to the pin securing bolt.

The hydraulic ram 30 is connected to the hydraulic system of the tractor to receive hydraulic fluid under pressure therefrom under the control of a valve or valves. The valve or valves may be manually operable but preferably are electrically operable from one or more control panels on the tractor and/or mixer feeder.

As illustrated in Figure 2, a layer of ultra high molecular weight polyethylene 36 is provided between the first element 12 and the steel member 16 of the second element, the polyethylene 36 facilitating relative movement of the first and second elements with reduced wear.

A hand-held control panel is connected to the mixer feeder and/or the tractor through an electrical cable the length of which is such as to allow an operator, dismounted from the tractor, to move to a position in which he can see the area in which the cutting drum of the mixer feeder is to be positioned. The length of the cable is insufficient for the operator to reach the vicinity of the cutting drum while holding the control panel, and the control system includes a "dead mans handle" or equivalent mechanism where at least the cutting drum is rendered inoperative when the operator releases the control panel. The control panel includes control buttons or the like effecting control over the position of the cutter drum support structure, the drive to the cutter drum, and the valve or valves associated with the ram 30.

In use, the mixer feeder is trailed by a tractor to the position in which it is to be used. The tractor is then stopped, and its brakes applied so that the tractor becomes immovable. Final positioning of the mixer feeder towards the silage clamp is then effected by adjusting the length of the drawbar using the control panel the operator being out of the cab of the towing vehicle, in a position to see the cutter drum but unable to enter the area of the cutter drum while it is operative. It will be recognised that increasing the length of the drawbar increases the separation of the mixer feeder from the tractor, and hence pushes the mixer feeder and its rear mounted cutter drum closer to the silage clamp. If the length of the drawbar is reduced, the separation of the mixer feeder and the tractor is reduced. The provision of the double acting hydraulic ram allows the length of the drawbar to be increased or reduced under the control of the operator, hence allowing accurate positioning of the mixer feeder.

Modifications to the above described drawbar assembly include replacing the hydraulic ram 30 with a pneumatically operated ram. Alternatively, the length of the drawbar could be adjusted by using a linear actuator.

In a further alternative, an externally screw threaded member may be secured to one of the first and second elements, and engaged with an internally screw threaded member connected to the other of the first and second elements in such a manner that relative rotation of the members results in the length of the drawbar being adjusted. An hydraulic or electric drive motor, controlled from said control panel, is provided for generating the relative rotation to extend or retract the drawbar.

As an alternative, the first and second elements 12, 16 could be pivotally interconnected, third and fourth elements similar to the first and second elements 12, 16 also being pivotally connected to one another, the first, second, third and fourth elements defining a parallelogram. The pivotal connection between the first and third elements is arranged to be connected to a tractor or other suitable vehicle while the pivotal connection between the second and fourth elements is connected to the agricultural machine. A ram or other suitable adjustment means is provided between the interconnection of the first and second elements and that of the third and fourth elements such that extension thereof alters the angle of the first element with respect to the second element thus also moving the second element bodily with respect to the stationary towing vehicle and adjusting the effective length of the drawbar.

Such an arrangement is particularly useful where the towing hitch of the vehicle is positioned substantially higher than the chassis of the machine.

It will be recognised that hydraulic and/or electrical power will be derived from the relevant system of the towing vehicle. While it is desirable that control over the functions of the mixer feeder or other agricultural machine utilizing the extensible drawbar, is effected by means of a hand held control panel, this is not essential and control could be effected from a fixed control panel on the tractor and/or the agricultural machine.

## Claims

1. An agricultural machine arranged to be trailed behind a vehicle, the agricultural machine including a drawbar for coupling the machine to the vehicle in use, and characterized in that the drawbar is of adjustable length and comprises a first element (12), and a second element (16) secured to the agricultural machine and movable with respect to the first element (12) in order to adjust the effective length of the drawbar to adjust the separation of the machine from the vehicle, and means (30) for moving said second element (16) with respect to said first element (12).

2. A machine as claimed in Claim 1, characterized in that the first and second elements (12, 16) are in a telescopic arrangement.

3. A machine as claimed in Claim 2, characterized in that the means for moving the second element (16) with respect to the first element (12) interconnects the first and second elements (12, 16).

4. A machine as claimed in Claim 1, characterized in that the first and second elements (12, 16) are pivotable with respect to one another, the means (30) for moving the second element (16) with respect to the first element (12) being arranged to adjust the angle therebetween.

5. A machine as claimed in Claim 4, characterized by third and fourth pivotally interconnected elements, the first, second, third and fourth elements defining a parallelogram linkage.

6. A machine as claimed in Claim 5, characterized in that the means (30) for moving the second element interconnects the pivotal connection of the first and second elements (12, 16) with that of the third and fourth elements.

7. A machine as claimed in any one of the preceding claims, characterized in that the means (30) for moving comprises a ram (30).

8. A machine as claimed in any one of Claims 1 to 7, characterized in that the means (30) for moving the second element (16) with respect to the first element (12) comprises an externally screw threaded member arranged to engage an internally screw threaded member, and means for rotating one of the screw threaded members with respect to the other screw threaded member to adjust the relative positions of the first and second elements.

9. A machine as claimed in any one of the preceding claims, characterized by remote control means for controlling operation of said means for moving said second element (16).

10. A machine as claimed in any one of the preceding claims, characterized by a storage area and means provided at the rear of the agricultural machine for loading the storage area.

11. A machine as claimed in Claim 10, characterized in that the means for loading comprises cutter means.

12. A method of adjusting the separation of an agricultural machine from a towing vehicle characterized by the step of actuating a mechanism for adjusting the length of a drawbar interconnecting the agricultural machine and the vehicle.

13. A method as claimed in Claim 12, characterized in that the machine is of the type claimed in any one of Claims 1 to 11.

14. A method as claimed in Claim 12 or Claim 13, characterized by the actuation of said mechanism externally of said towing vehicle by way of a remote control means.
